# EUROPÄISCHE PATENTSCHRIFT

(11) **EP 0 386 186 B1**
(45) Veröffentlichungstag und Bekanntmachung des Hinweises auf die Patenterteilung: **29.09.1993**
(21) Anmeldenummer: 89908149.1
(22) Anmeldetag: 28.07.1989
(51) Int. Cl.: C02F 1/48

(54) **MAGNETISCHER WASSERAUFBEREITER FÜR SCHNELLMONTAGE**
RAPIDLY MOUNTED MAGNETIC DEVICE FOR TREATING WATER
DISPOSITIF MAGNETIQUE DE TRAITEMENT D'EAU A MONTAGE RAPIDE

(30) Priorität: 11.08.1988 CH 3026/88
(43) Veröffentlichungstag der Anmeldung: 12.09.1990
(73) Patentinhaber: RIESEN, Heinz, CH-4227 Büsserach (CH)
(72) Erfinder: RIESEN, Heinz, CH-4227 Büsserach (CH)
(74) Vertreter: Eschmann, Heinz
(86) Internationale Anmeldenummer: CH8900140
(87) Internationale Veröffentlichungsnummer: WO9001463

(56) Entgegenhaltungen:
- WO-A-25/9
- US-A- 4 367 143

## Beschreibung

Die Erfindung betrifft einen magnetischen Wasseraufbereiter. Solche Wasseraufbereiter sind bekannt (vgl. CH-PS 664 147) Bisher mussten sie jedoch in das aufzubereitende, wasserführende Leitungsrohr eingebaut werden. Dazu benötigte man einen Fachmann. Zudem war der Wasseraufbereiter dem ständigen Kontakt des Wassers ausgesetzt.

Die US-A 4 367 143 zeigt einen magnetischen Wasseraufbereiter, dessen Permanentmagnete um das Wasserrohr montiert werden. Die dort vorgeschlagene Befestigung der Permanentmagnete umfasst mehrere an deren Aussenflächen anliegende Bügel, die durch Schrauben aneinander befestigt sind. Diese Befestigungsart erfordert jedoch einen grossen Zeitaufwand.

Einen magnetischen Wasseraufbereiter mit das Wasserrohr umschliessenden Permanentmagneten zeigt auch die WO-A81/02 529. Die ringförmig ausgebildeten Permanentmagnete lassen sich aber nur in Richtung der Wasserrohrachse auf dasselbe aufschieben und bedingen so ebenfalls einen erheblichen Montageaufwand.

Die Erfindung hat sich zur Aufgabe gestellt, einen Wasseraufbereiter zu schaffen, der diese Nachteile nicht mehr aufweist.
Diese Aufgabe wird durch den in Patentanspruch definierten Wasseraufbereiter gelöst.
Nachfolgend wird die Erfindung an einem Ausführungsbiespiel anhand der beiliegenden Zeichnung erläutert. Es zeigen:

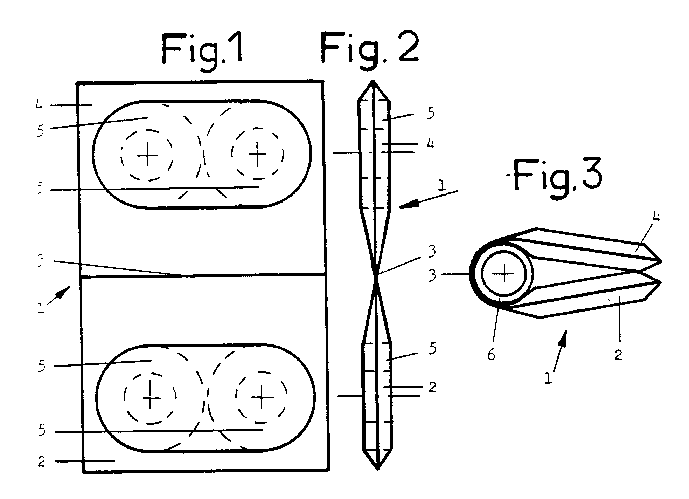

- FIG. 1: den aufgeklappten Wasseraufbereiter im Grundriss;
- FIG. 2: eine Seitenansicht des Wasseraufbereiters;
- FIG. 3: den an einem Wasserrohr installierten Wasseraufbereiter;
Der Sack 1 meist drei Abschnitte 2,3 und 4 auf. In den aüsseren Abschnitten 2 und 4 sind je zwei Dauermagnete 5 eingeschweisst oder eingenäht. Mit den Mittelabschnitt 3 wird der Wasseraufbereiter 1 um das wasserführende Rohr 6 gelegt. Der Wasseraufbereiter wird durch Magnetkraft gehalten und kann ohne die bestehende Installation zu verändern eingebaut werden. Montiert ist er 18 cm lang, 12 cm breit und 4-5 cm dick. Für Leitungen über 3/4" Zoll benötigt man mehrere Wasseraufbereiter, die man hintereinander um das Rohr legt.

## Patentansprüche

1. Magnetischer Wasseraufbereiter, dadurch gekennzeichnet, dass er einen allseitig geschlossenen Sack (1) mit zwei einander gegenüberliegenden, durch einen Mittelabschnitt (3) voneinander getrennten Aussenabschnitten 2,4 aufweisst, dass in jedem Aussenabschnitt jeweils zwei Dauermagnete (5) eingeschweisst oder eingenäht sind, derart, dass der Sack mit seinem Mittelabschnitt manschettenartig um das zu behandelnde wasserführende Rohr (6) legbar und durch die Dauermagnete fixierbar ist.

## Claims

1. Magnetic water treatment unit comprising a bag (1), closed on all sides and consisting of two sections (2, 4) facing one another, separated by a centre section (3), each outer section containing two permanent magnets either stitched or welded into the respective outer section, whereby the said bag can be mounted like a sleeve over the pipe (6) carrying the water to be treated and fixed by means of said magnets.

## Revendications

1. Dispositif de traitement d'eau, caractérisé en ce qu'il comprend un sac (1) fermé de tous côtés, comportant deux parties extérieures (2, 4) opposées et séparées l'une de l'autre par une partie médiane (3), et que, dans chaque partie extérieure, chaque fois deux aimants permanents (5) sont soudés ou cousus, de telle manière que le sac puisse être installé comme une manchette autour de la conduite d'eau (6) à traiter et puisse être fixé par les aimants permanents.
